# EUROPEAN PATENT APPLICATION

(11) **EP 2 080 735 A1**
(43) Date of publication of application: **22.07.2009**
(21) Application number: 07830932.5
(22) Date of filing: 31.10.2007
(51) Int. Cl.: C01B 3/56, B01D 53/04, B01J 20/18, B01J 20/20

(54) **HYDROGEN GAS SEPARATION METHOD AND SEPARATION APPARATUS**

(30) Priority: 08.11.2006 JP 2006302537
(71) Applicant: Sumitomo Seika Chemicals CO. LTD., Kako-gun Hyogo 675-0145 (JP)
(72) Inventor: HARUNA, Kazuo, Osaka-shi Osaka 5410041 (JP); SASANO, Hiroaki, Kako-gun Hyogo 6750145 (JP); SUMIDA, Toshihiko, Kako-gun Hyogo 6750145 (JP); FUKUSHIMA, Mayumi, Kako-gun Hyogo 6750145 (JP)
(74) Representative: Hayes, Adrian Chetwynd
(86) International application number: PCT/JP2007/071198
(87) International publication number: WO 2008/056579

(57) **Abstract**

A method is provided for separating hydrogen gas from a mixed gas obtained by autothermal reforming reaction of hydrocarbon-based material in which air is added. In this method, by pressure swing adsorption using adsorption towers (A-C) each filled with an adsorbent, a cycle is repeatedly performed, including an adsorption step of introducing the mixed gas into the adsorption tower to adsorb unnecessary gas contained in the mixed gas by the adsorbent to discharge product gas with high hydrogen gas concentration from the adsorption tower, and a desorption step of desorbing the unnecessary gas from the adsorbent to discharge the unnecessary gas from the adsorption tower. The adsorbent includes a 10 to 50 % filling percentage of activated carbon-based first adsorbent (D) arranged in the adsorption tower at an upstream portion in the flow direction of the mixed gas and a 90 to 50 % filling percentage of zeolite-based second adsorbent (E) arranged in the adsorption tower at a downstream portion in the flow direction.

## Description

### TECHNICAL FIELD

The present invention relates to a method and an apparatus for separating hydrogen gas from a mixed gas, which contains hydrogen as the main component, by removing unnecessary gas by pressure swing adsorption (PSA).

### BACKGROUND ART

Hydrogen as industrial gas (product gas with high hydrogen concentration) is utilized for glass melting, semiconductor manufacturing, optical fiber manufacturing, metal heat treatment, meltdown, oil hardening, etc. Nowadays, hydrogen stations for supplying fuel to fuel cell vehicles are being constructed, and there is a demand for the efficient production of high purity hydrogen gas.

For instance, in a known practical method for industrially producing hydrogen, hydrocarbon-based material such as methanol or natural gas is reformed to produce a mixed gas containing hydrogen as the main component, and then unnecessary gas other than hydrogen is removed from the mixed gas by pressure swing adsorption (PSA), whereby product gas with high purity hydrogen concentration is discharged. As the technique to reform the hydrocarbon-based material, steam reforming and partial oxidation reforming are known. The gas separation by PSA is performed by utilizing a plurality of adsorption towers filled with an adsorbent for selectively adsorbing a predetermined unnecessary gas. In each of the adsorption towers, a cycle including at least an adsorption step and a desorption step is repeated. In the adsorption step, mixed gas is introduced into an adsorption tower, and unnecessary gas contained in the mixed gas is adsorbed by the adsorbent, so that high purity hydrogen gas is discharged. In the desorption step, unnecessary gas is desorbed from the adsorbent, and desorption gas including the unnecessary gas and the gas remaining in the adsorption tower is discharged from the adsorption tower. As to the PSA, various improvements have been made to increase the purity of the hydrogen gas and the recovery rate.

In one method, for example, a cycle including an adsorption step, a depressurization step, a desorption step, a purging step and a pressurization step is repeated in each of the adsorption towers (see e.g. Patent Document 1 identified below). In the method disclosed in Patent Document 1, hydrogen gas is separated by PSA utilizing a plurality of adsorption towers filled with an adsorbent including e.g. a carbon molecular sieve and a Ca-A-type zeolite. In this method, residual gas in an adsorption tower, in which the adsorption step has been finished and which is hence under high pressure, is introduced into another adsorption tower, in which the desorption step has been finished and which is hence under low pressure. By this, depressurization (first and second depressurization steps) is performed in one adsorption tower, while purging and pressurization (first pressurization step) are performed in another adsorption tower. In this method, the depressurization is performed in two stages, i.e., by the first depressurization step and the second depressurization step. In the purging step which is paired with the first depressurization step, the residual gas (having a hydrogen gas concentration close to product gas) in the adsorption tower which is depressurized is recovered. Thus, the recovery rate of hydrogen gas is enhanced as compared with the case in which purging is performed by the use of product gas only. Further, in the pressurization step (first pressurization step) which is paired with the second depressurization step, the residual gas (still having a hydrogen gas concentration close to product gas) in the adsorption tower which is depressurized is recovered to the adsorption tower which is pressurized. This also enhances the recovery rate of hydrogen gas. Thus, according to this method, in separation of hydrogen gas by PSA, the recovery rate of hydrogen gas is enhanced while the hydrogen gas concentration in the product gas is maintained to be high.
Patent Document 1: JP-A-2004-66125

Nowadays, as a technique for reforming hydrocarbon-based material, autothermal reforming is often employed, which is performed by combining steam reforming and partial oxidation reforming. In steam reforming, by the steam reforming reaction which is endothermic reaction, hydrogen and carbon dioxide are produced from a hydrocarbon-based material and water. In the partial oxidation reforming, by the partial oxidation reforming reaction which is exothermic reaction, hydrogen and carbon dioxide are produced from a hydrocarbon-based material and oxygen. In autothermal reforming, by allowing steam reforming reaction and partial oxidation reforming reaction to occur concurrently, endotherm by steam reforming reaction and heat generation by partial oxidation reforming reaction are balanced with each other. Thus, the autothermal reforming is thermally independent reforming which does not require external heating. The autothermal reforming is advantageous to the simple structure of a reformer. Generally, in autothermal reforming, purified oxygen enriched gas or air is added as the oxygen to cause the partial oxidation reforming reaction. When air is added, inert nitrogen or argon is mixed in addition to oxygen. In this case, to obtain high-purity hydrogen gas (product gas) by separation from the reformed mixed gas by PSA, nitrogen and argon also need to be removed efficiently in addition to carbon dioxide, methane, methanol and carbon monoxide.

### DISCLOSURE OF THE INVENTION

The present invention has been proposed under the circumstances described above. It is, therefore, an object of the present invention to provide a product gas with high hydrogen gas concentration with enhanced recovery rate by separation of hydrogen gas by PSA from a mixed gas obtained by autothermal reforming reaction of hydrocarbon-based material to which air is added.

According to a first aspect of the present invention, there is provided a method for separating hydrogen gas from a mixed gas obtained by autothermal reforming reaction of hydrocarbon-based material to which air is added and containing hydrogen as a major component by pressure swing adsorption using a plurality of adsorption towers each filled with an adsorbent. The method comprises repeatedly performing a cycle including an adsorption step of introducing the mixed gas into the adsorption tower to adsorb unnecessary gas contained in the mixed gas by the adsorbent to discharge product gas with high hydrogen gas concentration from the adsorption tower, and a desorption step of desorbing the unnecessary gas from the adsorbent to discharge desorption gas including gas remaining in the adsorption tower and the unnecessary gas from the adsorption tower. The adsorbent includes a 10 to 50 % filling percentage of activated carbon-based first adsorbent arranged in the adsorption tower at an upstream portion in the flow direction of the mixed gas and a 90 to 50 % filling percentage of zeolite-based second adsorbent arranged in the adsorption tower at a downstream portion in the flow direction.

To solve the problems described above, the inventors of the present invention have conducted a study of how the kind, arrangement and filling percentage of adsorbents in the adsorption tower can influence the recovery rate of hydrogen gas. As a result, the inventors have found that the hydrogen gas concentration in product gas is maintained to be high and the recovery rate of hydrogen gas is enhanced when the adsorbent satisfies certain conditions, whereby the present invention has been achieved. Specifically, as will be understood also from the embodiments described below, high purity product gas is obtained when an activated carbon-based adsorbent (first adsorbent) is filled in an adsorption tower at an upstream portion in the flow direction of the mixed gas at the percentage of 10 to 50 %, and a zeolite-based adsorbent (second adsorbent) is filled in the adsorption tower at a downstream portion in the flow direction of the mixed gas at the percentage of 90 to 50 %.

This is because activated carbon-based adsorbents and zeolite-based adsorbents differ from each other in adsorption ability with respect to various gasses. That is, activated carbon-based adsorbents are excellent in the ability to adsorb and remove carbon dioxide, argon and nitrogen of a high concentration region, whereas zeolite-based adsorbents are excellent in the ability to adsorb and remove carbon monoxide and nitrogen of a low concentration region. In the method for separating hydrogen gas of the present invention, the mixed gas, which is separated, is obtained by autothermal reforming of hydrocarbon-based material to which air is added. Thus, the mixed gas contains a higher proportion of carbon dioxide, which is a by-product, and unreacted nitrogen. By filling an activated carbon-based adsorbent in an upstream portion, carbon dioxide, nitrogen and argon are selectively adsorbed in the upstream portion. Then, when the mixed gas reaches the downstream portion after passing through the activated carbon-based adsorbent, carbon monoxide is efficiently adsorbed and removed by the zeolite-based adsorbent without the influence of carbon dioxide, nitrogen and argon. In this way, in the method of separating hydrogen gas of the present invention, by arranging two kinds of adsorbents in a particular order and optimizing the filling percentage of the two kinds of adsorbents, the adsorption removal ability with respect to the entire unnecessary gas is properly exhibited. As a result, the recovery rate of hydrogen gas in the product gas is enhanced.

Preferably, the total concentration of argon and nitrogen in the product gas is not more than 100 ppm.

Preferably, the first adsorbent has an average micro pore diameter of 1.5 to 2.0 nm.

Preferably, the method by pressure swing adsorption further comprises a first depressurization step of discharging the gas remaining in an adsorption tower after the adsorption step into another adsorption tower until the pressure in the adsorption tower drops to a first intermediate pressure, and a second depressurization step of further discharging the gas remaining in the adsorption tower into said another adsorption tower until the pressure in the adsorption tower drops to a second intermediate pressure that is lower than the first intermediate pressure. The pressure difference between the adsorption pressure in the adsorption step and the first intermediate pressure is in the range of 140 to 280 KPa.

Preferably, the filling percentage of the first adsorbent is 20 to 40 %, whereas the filling percentage of the second adsorbent is 80 to 60 %.

Preferably, the adsorption pressure in the adsorption step is in a range of 0.5 to 4.0 MPa.

Preferably, the hydrocarbon-based material comprises gas or liquid selected from the group consisting of town gas containing natural gas as a main component, propane, butane, gasoline, naphtha, kerosene, methanol, ethanol and dimethyl ether.

According to a second aspect of the present invention, there is provided an apparatus for separating hydrogen gas from a mixed gas obtained by autothermal reforming reaction of hydrocarbon-based material to which air is added and containing hydrogen as a major component by pressure swing adsorption using a plurality of adsorption towers each filled with an adsorbent by introducing the mixed gas into the adsorption tower to adsorb unnecessary gas contained in the mixed gas by the adsorbent to discharge product gas with high hydrogen gas concentration from the adsorption tower, and desorbing the unnecessary gas from the adsorbent to discharge desorption gas including the gas remaining in the adsorption tower and the unnecessary gas from the adsorption tower. The adsorbent includes a 10 to 50 % filling percentage of activated carbon-based first adsorbent arranged in the adsorption tower at an upstream portion in the flow direction of the mixed gas and a 90 to 50 % filling percentage of zeolite-based second adsorbent arranged in the adsorption tower at a downstream portion in the flow direction. This hydrogen separation apparatus achieves the method according to the first aspect of the present invention, and hence, has the same advantages as those described above with respect to the first aspect of the present invention.

Other features and advantages of the present invention will become more apparent from the detailed description given below with reference to the accompanying drawings.

### BRIEF DESCRIPTION OF THE DRAWINGS

Fig. 1 is a schematic view showing a PSA gas separation apparatus with three towers for achieving a method for separating hydrogen gas according to the present invention.
Fig. 2 shows gas flow in each of the steps of the method for separating hydrogen gas according to the present invention.
Fig. 3 is a graph showing adsorption isotherms of activated carbon and zeolite with respect to carbon dioxide.
Fig. 4 is a graph showing adsorption isotherms of activated carbon and zeolite with respect to methane.
Fig. 5 is a graph showing adsorption isotherms of activated carbon and zeolite with respect to carbon monoxide.
Fig. 6 is a graph showing adsorption isotherms of activated carbon and zeolite with respect to argon.
Fig. 7 is a graph showing adsorption isotherms of activated carbon and zeolite with respect to nitrogen.
Fig. 8 is a graph showing adsorption isotherms of activated carbon and zeolite with respect to nitrogen.

### BEST MODE FOR CARRYING OUT THE INVENTION

As a preferred embodiment of the present invention, a method for concentrating and separating hydrogen gas from a mixed gas containing hydrogen will be described below with reference to the accompanying drawings.

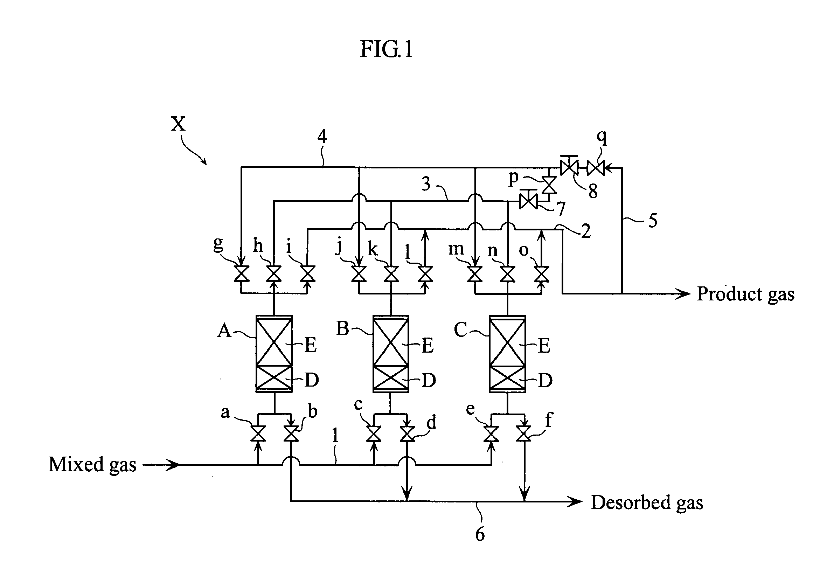

The method for separating hydrogen gas according to the present invention is performed by utilizing e.g. a PSA gas separation apparatus X shown in Fig. 1. The PSA gas separation apparatus X shown in the figure includes three adsorption towers A, B and C, a mixed gas line 1, a product gas line 2, a tower gas take-out line 3, a gas backflow line 4, a product gas return line 5 and a desorption gas line 6.

The adsorption towers A, B and C are filled with a predetermined adsorbent. The adsorbent includes an activated carbon-based first adsorbent D arranged in each adsorption tower at an upstream portion in the flow direction of the mixed gas (i.e., the lower portion of the adsorption tower in Fig. 1), and a zeolite-based second adsorbent E arranged in each adsorption tower at a downstream portion in the flow direction of the mixed gas (i.e., the upper portion of the adsorption tower in Fig. 1). As the first adsorbent D, use may be made of activated carbon such as coconut shell-based activated carbon or coal-based activated carbon having an average micro pore diameter of e.g. 1.5 to 2.0 nm, and more preferably, 1.7 to 1.8 nm. As the second adsorbent E, use may be made of Ca-A-type zeolite molecular sieve, Ca-X-type zeolite molecular sieve or Li-X-type zeolite molecular sieve. Among these, Ca-A-type zeolite molecular sieve is most preferably used. The first and the second adsorbents D and E are so filled as to achieve a predetermined filling percentage (volume ratio) relative to the total volume of the adsorbents. Specifically, the filling percentage of the first adsorbent D is set to 10 to 50 %, whereas the filling percentage of the second adsorbent E is set to 90 to 50 %.

The lines 1-6 are provided with switchover valves a-q. The tower gas take-out line 3, the gas backflow line 4 and the product gas return line 5 are provided with flow control valves 7 and 8, respectively. For instance, to separate hydrogen gas by pressure swing adsorption using the PSA gas separation apparatus X, an adsorption step, a depressurization step (a first depressurization step and a second depressurization step), a desorption step, a purging step and a pressurization step (a first pressurization step and a second pressurization step) are performed in each of the adsorption towers A, B and C by selectively opening and closing the switchover valves a-q.

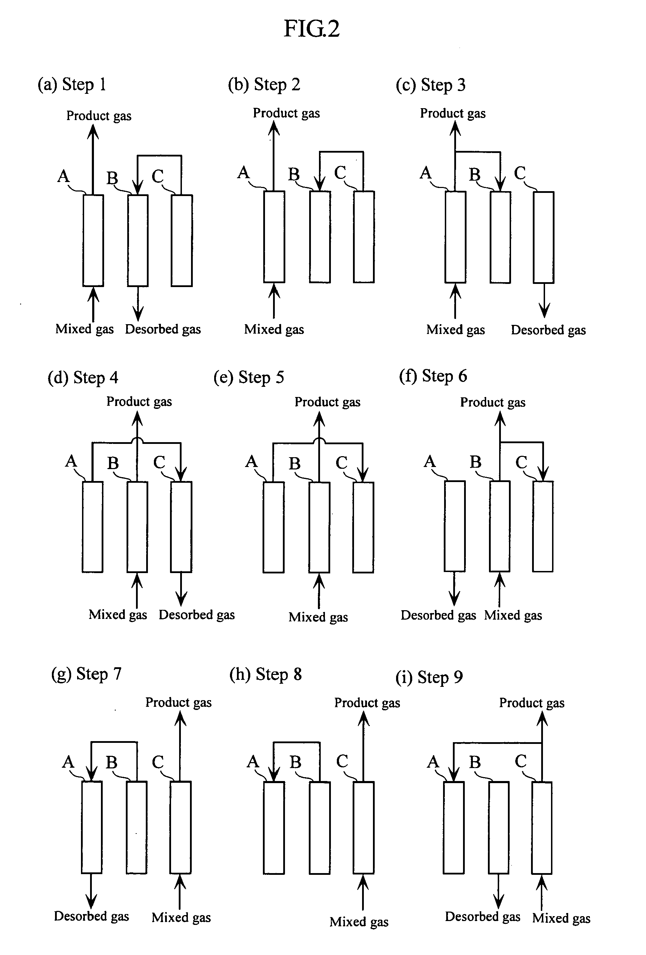

Specifically, predetermined steps (steps 1-9) are performed in respective adsorption towers A, B and C in parallel. Fig. 2 (a)-(i) schematically illustrates the gas flow in the PSA gas separation apparatus X in each step.

In Step 1, the adsorption step is performed in the adsorption tower A, the purging step is performed in the adsorption tower B, and the first depressurization step is performed in the adsorption tower C. The gas flow in Step 1 is shown in Fig. 2(a).

As shown in Fig. 1 and Fig. 2(a), mixed gas is introduced into the adsorption tower A through the mixed gas line 1 and the switchover valve a. The mixed gas is obtained by autothermal reforming reaction of hydrocarbon-based material to which air is added. The mixed gas contains hydrogen as the main component, and further contains, as unnecessary gas, a relatively high concentration of carbon dioxide and nitrogen, a relatively low concentration of carbon monoxide, and a small amount of unreacted hydrocarbon and argon. The hydrocarbon-based material in the present invention refers to town gas containing natural gas as the main component, propane, butane, gasoline, naphtha, kerosene, alcohols such as methanol and ethanol, dimethyl ether, and so on.

In the adsorption tower A in the adsorption step, the mixed gas passes through the tower which is held at a high pressure. First, in this process, carbon dioxide, nitrogen and hydrocarbons such as methane or methanol are mainly adsorbed by the first adsorbent D. Then, carbon monoxide and residual nitrogen are mainly adsorbed by the second adsorbent E. As a result, product gas with high hydrogen concentration is discharged from the tower. The product gas is recovered through the switchover valve i and the product gas line 2.

Into the adsorption tower B, the tower gas (purging gas) discharged from the adsorption tower C is introduced through the switchover valve n, the tower gas take-out line 3, the flow control valve 7, the switchover valve p, the gas backflow line 4 and the switchover valve j. Before this, the adsorption step has been performed in the adsorption tower C, whereas the desorption step has been performed in the adsorption tower B (see Step 9 shown in Fig. 2(i), which will be described later). Thus, the pressure in the adsorption tower C is higher than that in the adsorption tower B. By introducing the tower gas from the adsorption tower C into the adsorption tower B, the pressure in the adsorption tower C is reduced to a first intermediate pressure, and the gas remaining in the adsorption tower B is discharged through the switchover valve d and the desorption gas line 6.

In Step 2, the adsorption step is performed in the adsorption tower A, the first pressurization step is performed in the adsorption tower B, and the second depressurization step is performed in the adsorption tower C. The gas flow in Step 2 is shown in Fig. 2(b).

As shown in Fig. 1 and Fig. 2(b), similarly to Step 1, mixed gas is introduced into the adsorption tower A, and product gas is discharged from the tower. The product gas is recovered similarly to Step 1.

Meanwhile, the tower gas discharged from the adsorption tower C through the tower gas take-out line 3 is introduced into the adsorption tower B through the switchover valve n, the flow control valve 7, the switchover valve p, the gas backflow line 4 and the switchover valve j. Step 1 in which the residual gas is discharged from the adsorption tower B through the switchover valve d and the desorption gas line 6, the switchover valve d is closed in Step 2 so that the pressure is equalized between the adsorption tower B and the adsorption tower C. By this process, the pressure in the adsorption tower C is further reduced to a second intermediate pressure which is lower than the first intermediate pressure, whereas the pressure in the adsorption tower B is increased.

In Step 3, the adsorption step is performed in the adsorption tower A, the second pressurization step is performed in the adsorption tower B, and the desorption step is performed in the adsorption tower C. The gas flow in Step 3 is shown in Fig. 2(c).

As shown in Fig. 1 and Fig. 2(c), similarly to Step 1, mixed gas is introduced into the adsorption tower A, and product gas is discharged from the tower. Although the product gas is recovered similarly to Step 1, part of the product gas is introduced into the adsorption tower B through the product gas return line 5, the switchover valve q, the flow control valve 8, the gas backflow line 4 and the switchover valve j, whereby the pressure in the adsorption tower B is increased.

As for the adsorption tower C, the pressure in the tower has been reduced in Step 1 and Step 2, and the switchover valves e, m, n, o are closed, whereas the switchover valve f is opened. Thus, in the adsorption tower C, unnecessary gas is desorbed from the adsorbent and discharged from the tower along with the gas remaining in the adsorption tower C. This desorption gas is discharged through the switchover valve f and the desorption gas line 6.

Steps 4-6 are performed as shown in Figs. 2(d)-(f). Specifically, in the adsorption tower A, the first depressurization step, the second depressurization step and the desorption step are performed respectively in Steps 4-6, similarly to the adsorption tower C in Steps 1-3. In the adsorption tower B, adsorption step is continuously performed similarly to the adsorption tower A in Steps 1-3. In the adsorption tower C, the purging step, the first pressurization step and the second pressurization step are performed respectively in Steps 4-6, similarly to the adsorption tower B in Steps 1-3.

Steps 7-9 are performed as shown in Figs. 2(g)-(i). Specifically, in the adsorption tower A, the purging step, the first pressurization step and the second pressurization step are performed respectively in Steps 7-9, similarly to the adsorption tower B in Steps 1-3. In the adsorption tower B, the first depressurization step, the second depressurization step and the desorption step are performed respectively in Steps 7-9, similarly to the adsorption tower C in Steps 1-3. In the adsorption tower C, the adsorption step is performed similarly to the adsorption tower A in Steps 1-3.

By repeatedly performing the above-described Steps 1-9 in the adsorption towers A, B, C, unnecessary gas is removed from the mixed gas, and product gas with high hydrogen concentration is obtained continuously.

With the method according to the present invention, hydrogen gas is separated, by pressure swing adsorption, from a mixed gas obtained by autothermal reforming reaction of hydrocarbon-based material to which air is added. According to the present invention, by setting the arrangement and filling percentage of the activated carbon-based adsorbent and the zeolite-based adsorbent in the above-described manner, high purity hydrogen gas is obtained at higher recovery rate. Further, according to the present invention, in the process of PSA, the pressure difference between the adsorption pressure (maximum pressure) in the adsorption step and the first intermediate pressure in the first depressurization step is set to a range which is most suitable for achieving higher hydrogen gas recovery.

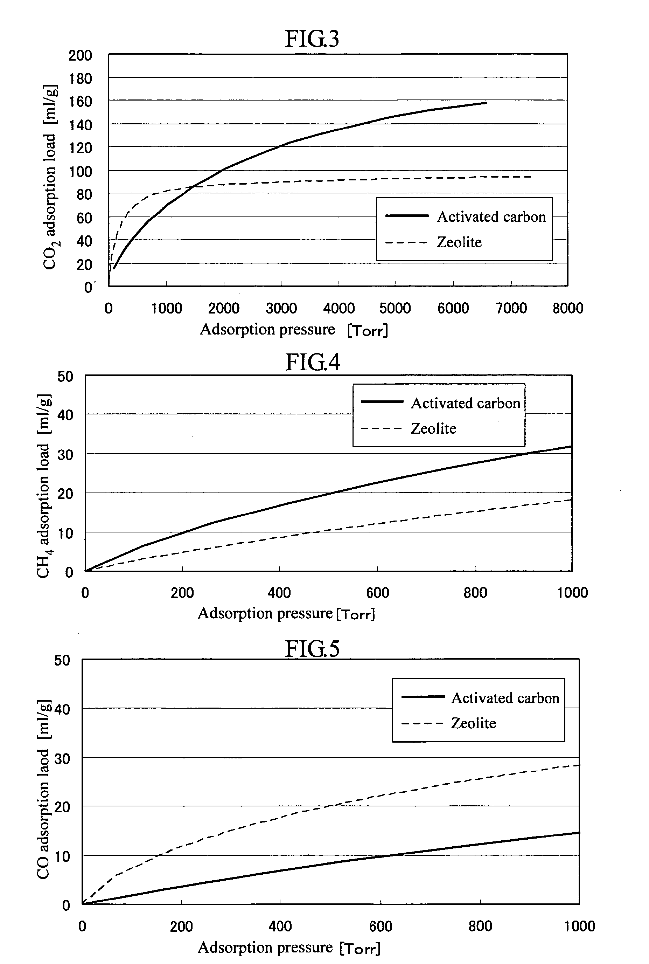

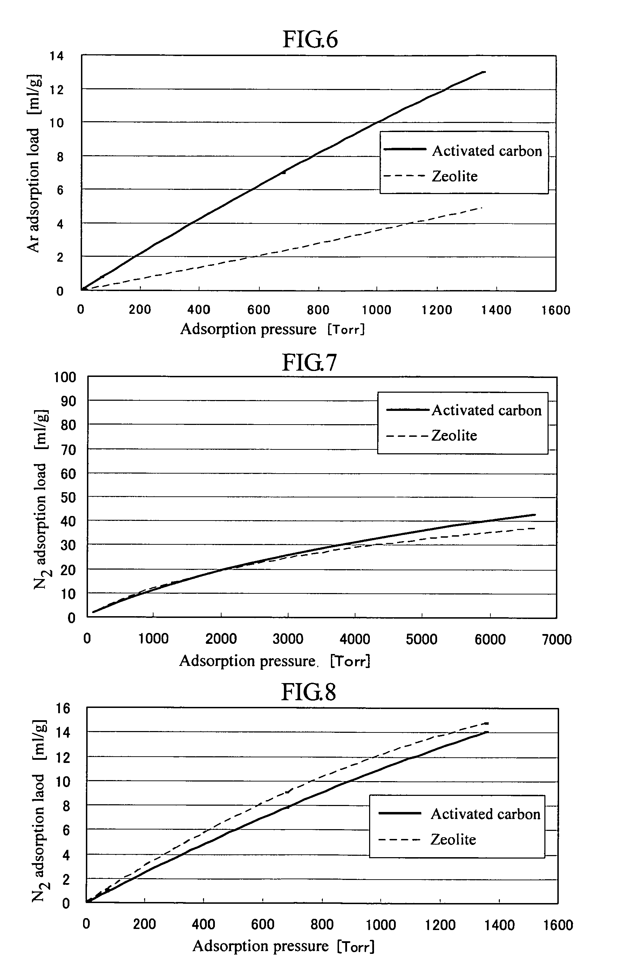

The arrangement of the activated carbon-based adsorbent and the zeolite-based adsorbent in the above-described order is effective because of the difference between the two adsorbents in adsorption ability with respect to various kinds of gases. Figs. 3-8 show absorption isotherms of a coconut shell-based activated carbon as the first adsorbent D of the present invention and a Ca-A-type zeolite as the second adsorbent E of the present invention at ordinary temperature (25 °C) with respect to various substances as the target to be removed. Specifically, Fig. 3 shows the adsorption isotherms with respect to carbon dioxide as a target substance to be removed. Similarly, Fig. 4 shows the adsorption isotherms with respect to methane. Fig. 5 shows the adsorption isotherms with respect to carbon monoxide. Fig. 6 shows the adsorption isotherms with respect to argon. Figs. 7 and 8 show the adsorption isotherms with respect to nitrogen.

It is found from the slopes of the adsorption isotherms shown in Figs. 3-6 that activated carbon is suitable as the adsorbent for carbon dioxide, methane and argon, whereas zeolite is suitable as the adsorbent for carbon monoxide. The adsorption removal amount of a gas component is obtained by subtracting the adsorption load at the desorption pressure (partial pressure of the above-mentioned each gas), which is lower, from the adsorption load at the adsorption pressure, which is higher. As shown in Figs. 3-6, the adsorption removal amount of carbon dioxide, methane and argon by activated carbon is larger than that by zeolite, whereas the adsorption removal amount of carbon monoxide by zeolite is larger than that by activated carbon.

Table 1 below shows the gas component of examples of mixed gas which can be employed in the present invention. Specifically, the table shows the component of a mixed gas obtained by autothermal reforming reaction of propane to which air and water are added, and that of a mixed gas obtained by autothermal reforming reaction of methanol to which air and water are added. With respect to the mixed gas obtained by autothermal reforming of propane (the left side in the table), the adsorption removal amount of carbon dioxide by activated carbon and that by zeolite will be calculated and compared below based on Fig. 3, supposing that the adsorption pressure (maximum pressure) in the adsorption step is 0.85 MPa (gauge pressure) and the desorption pressure is atmospheric pressure (0.103 MPa) in pressure swing adsorption.

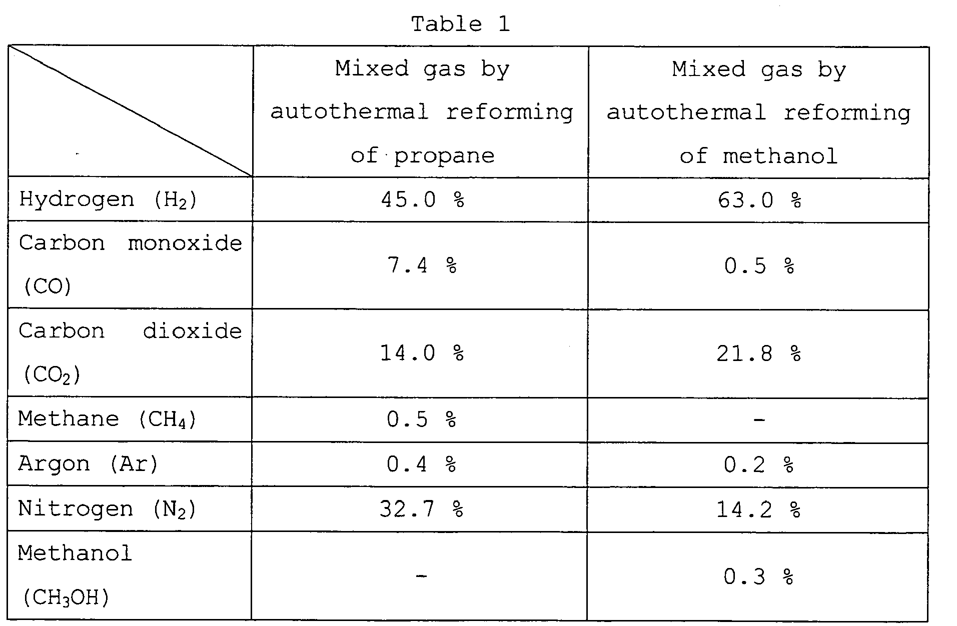

The partial pressure of carbon dioxide gas in adsorption is (0.85+0.103)×(760/0.103)×0.14=984 Torr. The partial pressure of carbon dioxide gas in desorption is 760×0.14=106 Torr. Thus, the adsorption load of carbon dioxide by activated carbon in adsorption is 65 ml/g, whereas the adsorption residual load of carbon dioxide in desorption is 20 ml/g. Thus, the adsorption removal load of carbon dioxide, which is obtained by subtracting the adsorption residual load from the adsorption load, is 45 ml/g. On the other hand, the adsorption load of carbon dioxide by zeolite in adsorption is 81 ml/g, whereas the adsorption residual load of carbon dioxide in desorption is 53 ml/g, so that the adsorption removal load of carbon dioxide by zeolite is 28 ml/g. Thus, the adsorption removal ability of activated carbon is about 1.6 times as much as that of zeolite per unit filling load. Further, in the case of zeolite, even when desorption proceeds to reach atmospheric pressure, the adsorption residual load of carbon dioxide is at least twice as much as that in the case of activated carbon. Thus, as compared with activated carbon, the adsorption load of other unnecessary gas (e.g. carbon monoxide or nitrogen) by zeolite is smaller due to the influence of the residual load of carbon dioxide and becomes smaller than the load shown in the adsorption isotherms.

It is desirable to set the adsorption pressure (maximum pressure) in the adsorption step as high as possible, because the adsorption load of carbon dioxide increases as the adsorption pressure increases. However, extremely high pressure is not practical, because, the rate of increase in the adsorption load of carbon dioxide reduces when the pressure exceeds a certain degree. Thus, it is practical to set the maximum pressure in the adsorption step to the range of 0.5 to 4.0 MPa.

With respect to the mixed gas obtained by autothermal reforming of propane, the adsorption removal amount of methane by activated carbon and that by zeolite will be calculated and compared below based on Fig. 4, supposing that the adsorption pressure in the adsorption step is 0.85 MPa (gauge pressure) and the desorption pressure is atmospheric pressure (0.103 MPa). The partial pressure of methane gas in adsorption is (0.85+0.103)×(760/0.103)×0.005=35 Torr. The partial pressure of methane gas in desorption is 760×0.005=3.8 Torr. Thus, the adsorption amount of methane by activated carbon in adsorption Step is 2.0 ml/g, whereas the adsorption load of methane in desorption is 0.2 ml/g. Thus, the adsorption removal load of methane, which is obtained by subtracting the adsorption residual load from the adsorption load, is 1.8 ml/g. On the other hand, the adsorption load of methane by zeolite in adsorption is 1.0 ml/g, whereas the adsorption load of methane in desorption is 0.1 ml/g, so that the adsorption removal amount of methane by zeolite is 0.9 ml/g. Thus, the adsorption removal ability of activated carbon is about twice as much as that of zeolite per unit filled load. In the mixed gas obtained by autothermal reforming of methanol, 0.3 % of methanol remains. Similarly to methane, the absorption removal amount of methanol by activated carbon is larger than that by zeolite.

As will be understood from Figs. 7 and 8, in the case of adsorption of nitrogen, activated carbon is suitable for the region in which the partial pressure of nitrogen gas is relatively high (high concentration region), whereas zeolite is suitable for the region in which the partial pressure of nitrogen gas is relatively low (low concentration region). Thus, it is desirable to fill activated carbon in the adsorption tower at an upstream portion (high concentration region) in the flow direction of the mixed gas and fill zeolite in the adsorbent tower at a downstream portion (low concentration region) in the flow direction of the mixed gas. With this arrangement, a relatively high concentration of nitrogen is removed by activated carbon in the upstream portion, and a relatively small amount of nitrogen, which has not been removed by activated carbon, is efficiently removed by zeolite in the downstream portion.

As will be understood from above, by filling the activated carbon-based adsorbent (first adsorbent D) in the adsorption tower at an upstream portion in the flow direction of the mixed gas and filling zeolite-based adsorbent (second adsorbent E) in the adsorption tower at a downstream portion in the flow direction, carbon dioxide, nitrogen, methane (or methanol) and argon are selectively removed by the activated carbon-based adsorbent at the upstream portion. After passing through the activated carbon-based adsorbent, the concentration of impurities such as carbon monoxide in the gas becomes to be high. Such impurities are efficiently removed by the zeolite-based adsorbent at the downstream portion. Provided that carbon dioxide, nitrogen, methane (or methanol) and argon are completely removed by activated carbon, the component of the gas after passing through the activated carbon-based adsorbent is as shown in Table 2. The concentration of carbon monoxide is about 1.6 to 1.9 times after passing through the activated carbon-based adsorbent.

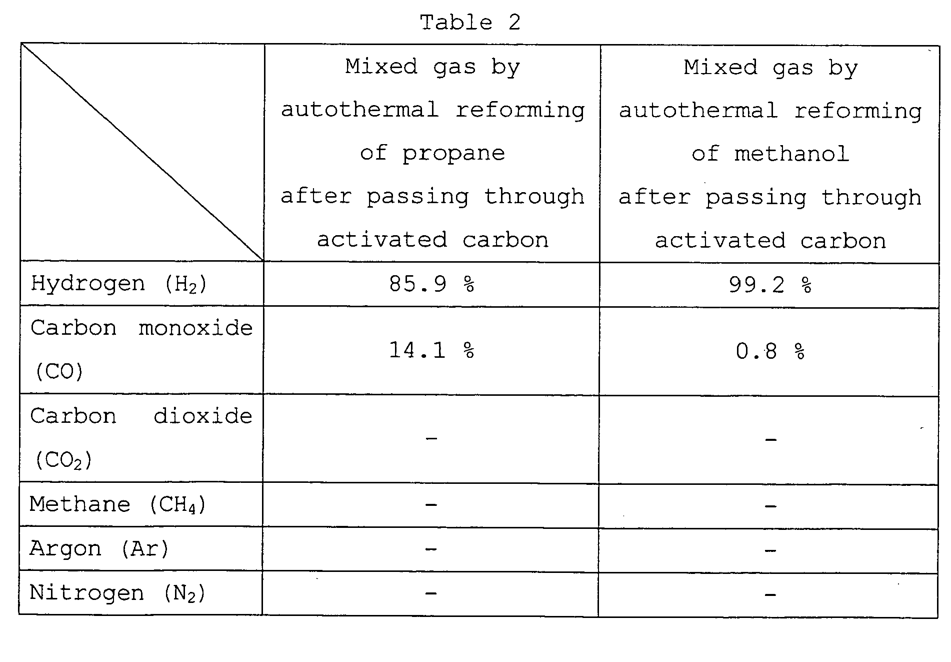

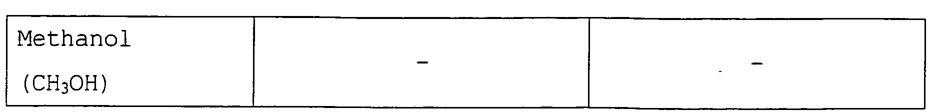

As will be understood from the Examples described below, as to the filling percentage of the activated carbon-based adsorbent (first adsorbent D) to the zeolite-based adsorbent (second adsorbent E), the first adsorbent D is filled from 10 to 50 %, whereas the second adsorbent E is filled from 90 to 50 %. With this arrangement, product gas with a high purity of 99.99% or more is obtained at a higher hydrogen gas recovery rate. This is because the adsorption breakthrough curve is optimized by appropriately changing the filling percentage of the adsorbents. That is, when the filling percentage of the adsorbents is within the above-described range, argon and nitrogen are removed to achieve the total concentration of not more than 100 ppm, so that the recovery rate of hydrogen gas is also higher.

Although an embodiment of the present invention has been described above, the present invention is not limited to the embodiment. The specific arrangement of the method for separating hydrogen gas according to the present invention and the apparatus for performing the method can be modified in many ways without departing from the scope of the spirit of the present invention. For instance, although three adsorption towers are employed in the foregoing embodiment, the number of the adsorption towers of the PSA gas separation apparatus is not limited to three. Since the hydrogen separation performance depends on the adsorption breakthrough curve in the adsorbent layer in adsorption step, the use of two or more than four adsorption towers also provide the same advantages.

### EXAMPLES

The advantages of the present invention will be described below by Examples and Comparative Examples.

### Example 1:

In this example, by using the PSA gas separation apparatus X shown in Fig. 1, which composes of three adsorption towers, hydrogen gas was separated from mixed gas by the separation method including the steps described in the foregoing embodiment. Specifically, the gas separation was performed under the following conditions.

The adsorption towers used were cylinders whose diameter is 50 mm. Coconut shell-based activated carbon of an average micro pore diameter of 1.7 to 1.8 nm as the first adsorbent and Ca-A-type zeolite molecular sieve as the second adsorbent were filled into the adsorption tower, whose volume is 2.936 liters in total. In this example, the filling amount of each adsorbent was so adjusted that the filling percentage of the first adsorbent is 10 % and the filling percentage of the second adsorbent is 90 % (volume). As the mixed gas, use was made of a gas obtained by autothermal reforming reaction of propane to which air and water had been added. This mixed gas containing 45.0 % of hydrogen, 14.0% of carbon dioxide, 7.4 % of carbon monoxide, 0.5 % of methane, 0.4 % of argon and 32.7 % of nitrogen as its volume. The mixed gas was supplied at the flow rate of 850 NL/hr. The adsorption pressure (maximum pressure) in the adsorption step was set to 850 kPa (gauge pressure: this holds true in every case of the pressures described hereinafter), whereas the final pressure in the first depressurization step (first intermediate pressure) was set to 640 kPa, so that the pressure difference between these was 210 kPa. The final pressure in the second depressurization step (second intermediate pressure) was set to 320 kPa, whereas the minimum pressure in the desorption step was set to 6 kPa. The results are written in Table 3 below.

### Examples 2-5, Comparative Examples 1-5:

Separation of hydrogen gas from a mixed gas was performed similarly to Example 1 except that the filling percentage of the first adsorbent to the second adsorbent was set to 20%:80% (Example 2), 30%:70% (Example 3), 40%:60% (Example 4), 50%:50% (Example 5), 0%:100% (Comparative Example 1), 60%:40% (Comparative Example 2), 70%:30% (Comparative Example 3), 80%:20% (Comparative Example 4) and 100%:0% (Comparative Example 5), instead of 10%:90% in Example 1. The results are also written in Table 3.

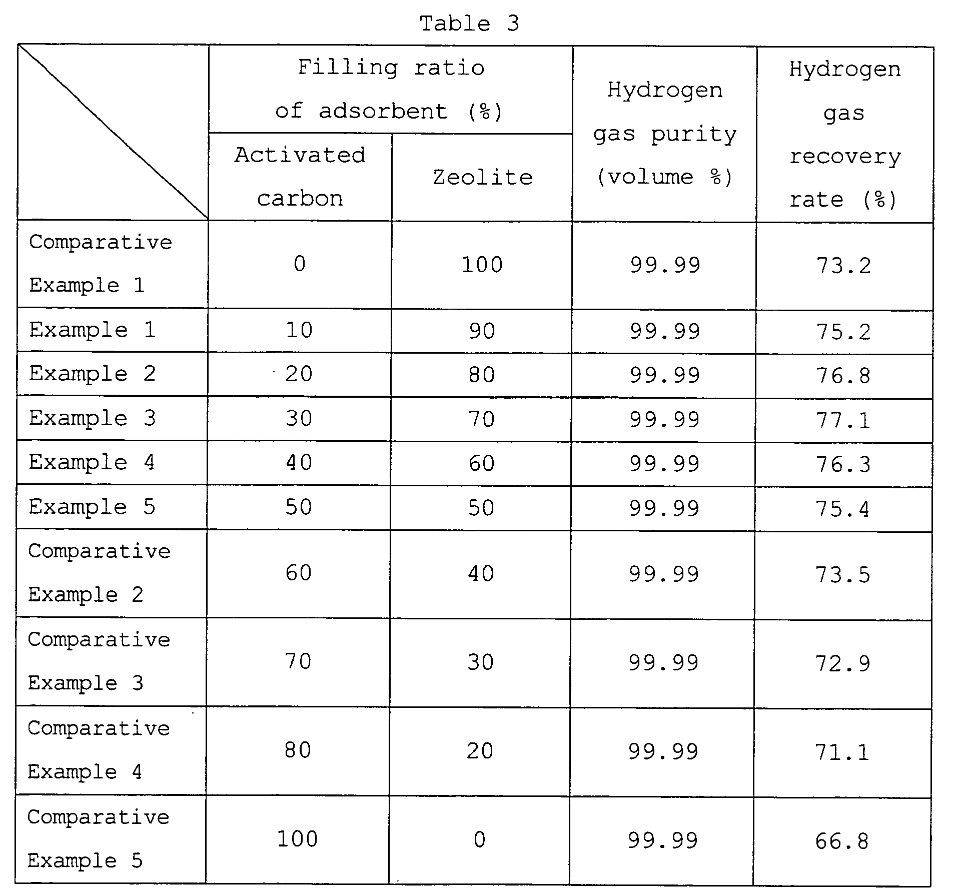

As will be understood from Table 3, when the filling percentage of activated carbon is in the range of 10 to 50 %, high purity hydrogen gas (product gas) with a purity of 99.99% or more is obtained at a higher hydrogen gas recovery rate from a mixed gas obtained by autothermal reforming of propane and containing nitrogen and argon. From the viewpoint of enhancement of the hydrogen gas recovery rate, it is preferable that the filling percentage of activated carbon is in the range of 20 to 40%. Particularly, when the filling percentage of activated carbon to zeolite is 30%:70%, the highest hydrogen gas recovery rate (77.1 %) is achieved.

### Example 6:

In this example, use was made of a mixed gas obtained by autothermal reforming reaction of methanol to which air and water had been added. This mixed gas containing 45.0 % of hydrogen, 21.8% of carbon dioxide, 0.5 % of carbon monoxide, 0.3 % of methanol, 0.2 % of argon and 14.2 % of nitrogen as its volume. With other conditions being the same as those of Example 1, hydrogen gas was separated from the mixed gas. The results are written in Table 4.

### Examples 7-10, Comparative Examples 6-10:

Separation of hydrogen gas from a mixed gas was performed similarly to Example 6 except that the filling percentage of the first adsorbent to the second adsorbent was set to 20%:80% (Example 7), 30%:70% (Example 8), 40%:60% (Example 9), 50%:50% (Example 10), 0%:100% (Comparative Example 6), 60%:40% (Comparative Example 7), 70%:30% (Comparative Example 8), 80%:20% (Comparative Example 9) and 100%:0% (Comparative Example 10), instead of 10%:90% in Example 6. The results are also written in Table 4.

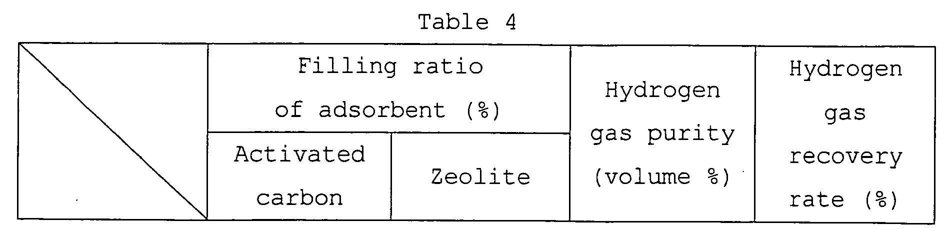

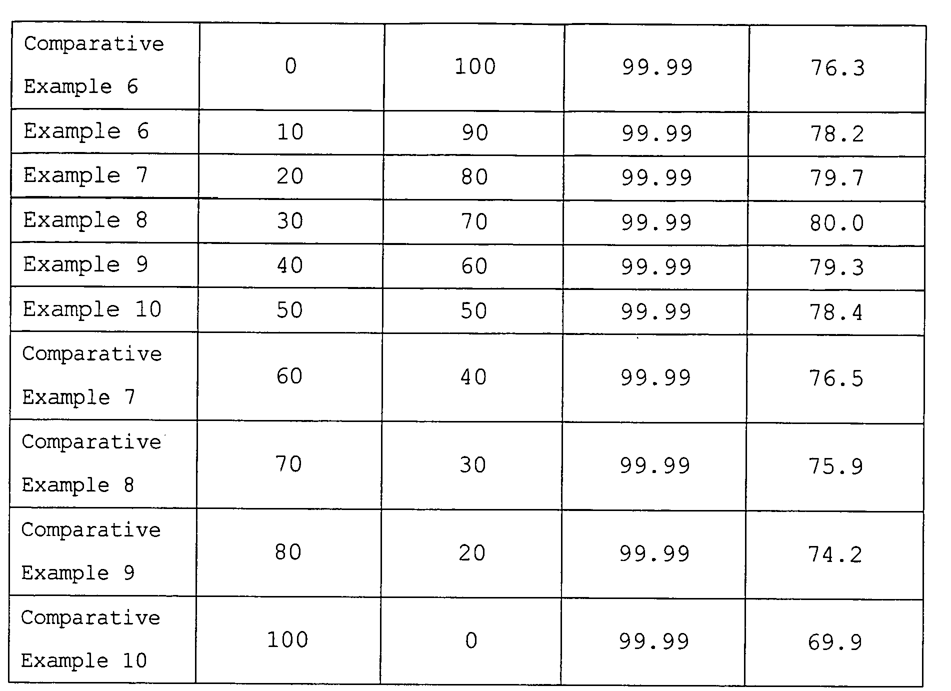

As will be understood from Table 4, when the filling percentage of activated carbon is in the range of 10 to 50 %, high purity hydrogen gas (product gas) with a purity of 99.99% or more is obtained at a higher hydrogen gas recovery rate from a mixed gas obtained by autothermal reforming of methanol and containing nitrogen and argon. From the viewpoint of enhancement of the hydrogen gas recovery rate, it is preferable that the filling percentage of activated carbon is in the range of 20 to 40%. Particularly, when the filling percentage of activated carbon to zeolite is 30%:70%, the highest hydrogen gas recovery rate (80.0 %) is achieved.

### Example 11:

In this example, the filling percentage of the first adsorbent to the second adsorbent in the adsorption tower was set to 30%:70%. The first intermediate pressure was changed so that the pressure difference between the adsorption pressure and the first intermediate pressure was 140 kPa. With other conditions being the same as those of Example 1, hydrogen gas was separated from the mixed gas obtained by autothermal reforming reaction of propane. The results are written in Table 5.

### Examples 12-14, Comparative Examples 11, 12:

Separation of hydrogen gas from a mixed gas was performed similarly to Example 11 except that the pressure difference between the adsorption pressure and the first intermediate pressure was set to 160 kPa (Example 12), 260 kPa (Example 13), 280 kPa (Example 14), 120 kPa (Comparative Example 11) and 300 kPa (Comparative Example 12), instead of 140 kPa in Example 11. The results are also written in Table 5.

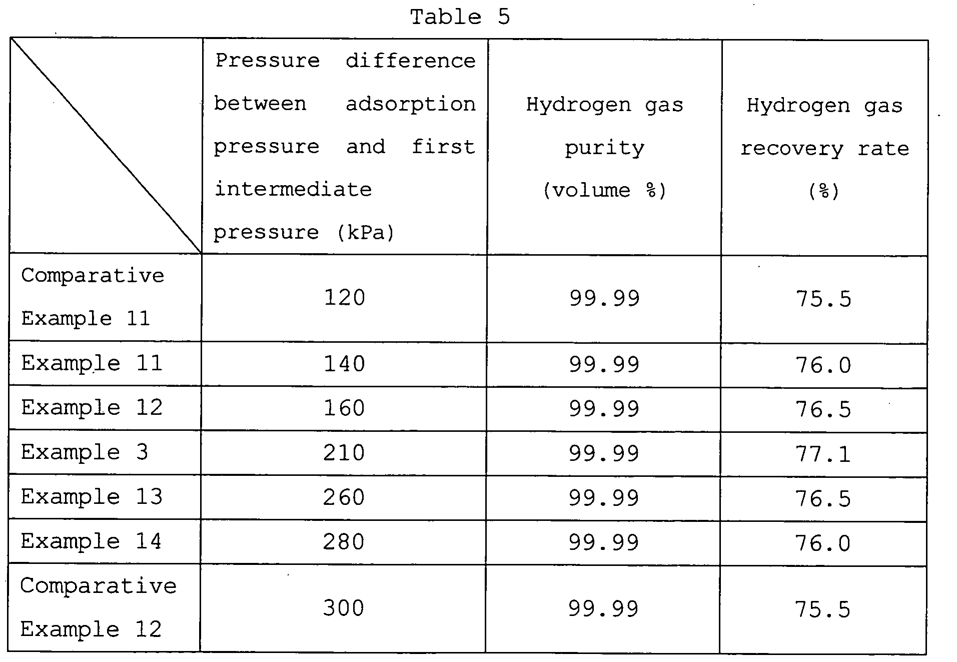

### Example 15:

In this example, the filling percentage of the first adsorbent to the second adsorbent in the adsorption tower was set to 30%:70%. The first intermediate pressure was changed so that the pressure difference between the adsorption pressure and the first intermediate pressure was 140 kPa. With other conditions being the same as those of Example 6, hydrogen gas was separated from the mixed gas obtained by autothermal reforming reaction of methanol. The results are written in Table 6.

### Examples 16-18, Comparative Examples 13, 14:

Separation of hydrogen gas from a mixed gas was performed similarly to Example 15 except that the pressure difference between the adsorption pressure and the first intermediate pressure was set to 160 kPa (Example 16), 260 kPa (Example 17), 280 kPa (Example 18), 120 kPa (Comparative Example 13) and 300 kPa (Comparative Example 14), instead of 140 kPa in Example 15. The results are also written in Table 6.

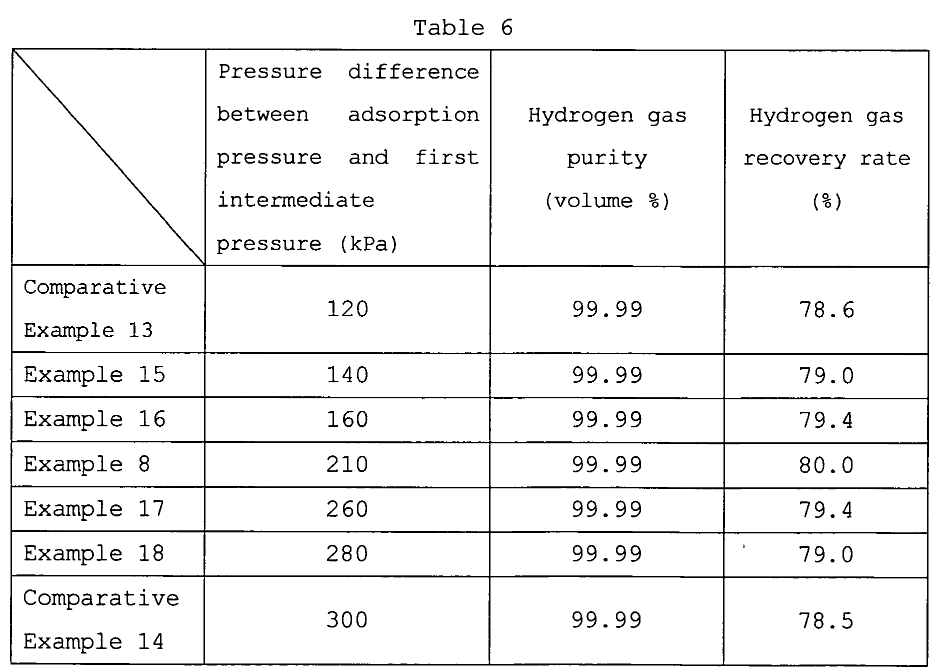

As will be understood from Tables 5 and 6, the recovery rate of hydrogen gas is highest when the pressure difference between the adsorption pressure and the first intermediate pressure is 210 kPa. The recovery rate of hydrogen gas is higher when the pressure difference is in the range of 140 to 280 kPa.

As described above, according to the present invention, in separation of hydrogen gas from a mixed gas obtained by autothermal reforming reaction of hydrocarbon-based material to which air is added by PSA, the recovery rate of hydrogen gas is enhanced while the hydrogen gas concentration in the product gas is maintained to be higher.

## Claims

1. A method for separating hydrogen gas from a mixed gas obtained by autothermal reforming reaction of hydrocarbon-based material to which air is added and containing hydrogen as a major component by pressure swing adsorption using a plurality of adsorption towers each filled with an adsorbent, the method comprising repeatedly performing a cycle including an adsorption step of introducing the mixed gas into the adsorption tower to adsorb unnecessary gas contained in the mixed gas by the adsorbent to discharge product gas with high hydrogen gas concentration from the adsorption tower, and a desorption step of desorbing the unnecessary gas from the adsorbent to discharge desorption gas including gas remaining in the adsorption tower and the unnecessary gas from the adsorption tower;
wherein the adsorbent includes a 10 to 50 % filling percentage of activated carbon-based first adsorbent arranged in the adsorption tower at an upstream portion in a flow direction of the mixed gas and a 90 to 50 % filling percentage of zeolite-based second adsorbent arranged in the adsorption tower at a downstream portion in the flow direction.

2. The method for separating hydrogen gas according to claim 1, wherein total concentration of argon and nitrogen in the product gas is not more than 100 ppm.

3. The method for separating hydrogen gas according to claim 1, wherein the first adsorbent has an average micro pore diameter of 1.5 to 2.0 nm.

4. The method for separating hydrogen gas according to claim 1, further comprising a first depressurization step of discharging gas remaining in an adsorption tower after the adsorption step into another adsorption tower until the pressure in the adsorption tower drops to a first intermediate pressure, and after the above first depressurization step a second depressurization step of further discharging gas remaining in the adsorption tower into said another adsorption tower until the pressure in the adsorption tower drops to a second intermediate pressure that is lower than the first intermediate pressure;
wherein the pressure difference between adsorption pressure in the adsorption step and the first intermediate pressure is in a range of 140 to 280 KPa.

5. The method for separating hydrogen gas according to claim 1, wherein the filling percentage of the first adsorbent is 20 to 40 %, whereas the filling percentage of the second adsorbent is 80 to 60 %.

6. The method for separating hydrogen gas according to claim 1, wherein adsorption pressure in the adsorption step is in a range of 0.5 to 4.0 MPa.

7. The method for separating hydrogen gas according to claim 1, wherein the hydrocarbon-based material comprises gas or liquid selected from the group consisting of town gas containing natural gas as a main component, propane, butane, gasoline, naphtha, kerosene, methanol, ethanol and dimethyl ether.

8. An apparatus for separating hydrogen gas from a mixed gas obtained by autothermal reforming reaction of hydrocarbon-based material to which air is added and containing hydrogen as a major component by pressure swing adsorption using a plurality of adsorption towers each filled with an adsorbent by introducing the mixed gas into the adsorption tower to adsorb unnecessary gas contained in the mixed gas by the adsorbent to discharge product gas with high hydrogen gas concentration from the adsorption tower, and desorbing the unnecessary gas from the adsorbent to discharge desorption gas including gas remaining in the adsorption tower and the unnecessary gas from the adsorption tower;
wherein the adsorbent includes a 10 to 50 % filling percentage of activated carbon-based first adsorbent arranged in the adsorption tower at an upstream portion in a flow direction of the mixed gas and a 90 to 50 % filling percentage of zeolite-based second adsorbent arranged in the adsorption tower at a downstream portion in the flow direction.

9. The apparatus for separating hydrogen gas according to claim 8, wherein the first adsorbent has an average micro pore diameter of 1.5 to 2.0 nm.

10. The apparatus for separating hydrogen gas according to claim 8, wherein the filling percentage of the first adsorbent is 20 to 40 %, whereas the filling percentage of the second adsorbent is 80 to 60 %.
